# EUROPÄISCHE PATENTSCHRIFT

(11) **EP 1 899 142 B1**
(45) Veröffentlichungstag und Bekanntmachung des Hinweises auf die Patenterteilung: **13.08.2008**
(21) Anmeldenummer: 06723952.5
(22) Anmeldetag: 01.04.2006
(51) Int. Cl.: B29C 65/00, B29D 30/42

(54) **VERFAHREN UND VORRICHTUNG ZUM EINSATZ BEIM AUTOMATISIERT ABLAUFENDEN AUFBAU EINES FAHRZEUGLUFTREIFENS**
METHOD AND DEVICE FOR USE IN THE AUTOMATED CONSTRUCTION OF A VEHICLE TYRE
PROCEDE ET DISPOSITIF POUVANT ETRE UTILISES DANS LA CONSTRUCTION AUTOMATISEE D'UN PNEU DE VEHICULE A MOTEUR

(30) Priorität: 24.05.2005 DE 102005023924
(43) Veröffentlichungstag der Anmeldung: 19.03.2008
(73) Patentinhaber: Continental Aktiengesellschaft, 30165 Hannover (DE)
(72) Erfinder: GROPPE, Markus, 40213 Düsseldorf (DE); WINKLER, Jens, 30173 Hannover (DE)
(74) Vertreter: Finger, Karsten
(86) Internationale Anmeldenummer: PCT/EP2006/002992
(87) Internationale Veröffentlichungsnummer: WO 2006/125492

(56) Entgegenhaltungen:
- EP-A- 0 417 991
- EP-A- 1 431 023
- US-A- 5 169 482
- PATENT ABSTRACTS OF JAPAN Bd. 1996, Nr. 02, 29. Februar 1996 (1996-02-29) & JP 07 276530 A (TOYO TIRE & RUBBER CO LTD), 24. Oktober 1995 (1995-10-24)

## Beschreibung

Die Erfindung betrifft ein Verfahren und eine Vorrichtung zum Einsatz beim automatisiert ablaufenden Aufbau eines Fahrzeugluftreifens unter Verwendung von stumpf gespleißten Reifenbauteilen, beispielsweise aus Materialbahnen aus in eine Kautschukmischung eingebetteten textilen Corden oder Stahlcorden, beispielsweise zur Herstellung einer Karkasseinlage des Fahrzeugluftreifens, wobei die Endabschnitte der Materialbahn in einer Spleißeinrichtung mit gegeneinander bewegbaren Paaren von Spleißelementen einklemmbar und stumpf zusammenfügbar sind.

Ein Verfahren und eine Vorrichtung dieser Art sind beispielsweise aus der EP-A-1431 023 oder aus der EP-A-1 312 460 bekannt.

Spleißanlagen, welche ein stumpfes Spleißen der beiden Endabschnitte einer Materialbahn ermöglichen, beispielsweise zur Herstellung einer ringförmig vorgeformten Stahl- oder Textilcordkarkasse für PKW- oder LKW Reifen, sind aus der Patentliteratur in unterschiedlichen Ausführungsformen bekannt. Stahl- oder Textilcordkarkasseinlagen werden üblicher Weise aus Kautschuk beschichteten Cordbahnen hergestellt, in 500 mm bis 1500 mm breite Abschnitte zerlegt, deren Endabschnitte stumpf aneinander gefügt werden. In den dabei entstehenden geschlossenen Materialbahnen in der Breite von 500 mm bis 1500 mm sind die zuvor längs verlaufenden Corde nun quer angeordnet. In der Praxis üblich ist ein Zusammenfügen der Endabschnitte durch Überlappen direkt auf der Reifenaufbautrommel. Neben der Materialverschwendung hat eine Überlappung der Endabschnitte von Reifenbauteilen negative Auswirkungen auf Reifeneigenschaften im Normalbetrieb, insbesondere sind die Folgen Unwucht und Ungleichförmigkeit der hergestellten Reifen. Eine Verbindung der Reifenbauteile durch einen stumpfen Spleiß vermeidet unerwünschte Materialanhäufungen und -dehnungen und ist somit mit einer Verbesserung der Reifengleichförmigkeit verbunden. Ein ringförmiges Schließen des Reifenbauteils direkt auf der Reifenaufbautrommel hat sich aber als kaum durchführbar erwiesen.

Aus der Patentliteratur sind vor allem Verfahren und Vorrichtungen bekannt, die sich mit der Durchführung des eigentlichen Spleißvorganges zum stumpfen Verbinden der Endabschnitte von Materialbahnen für Reifenbauteile befassen. So ist beispielsweise aus der DE 23 59 131 A eine Vorrichtung zum Verbinden der Ränder der Endabschnitte einer Materialbahn bekannt, bei der zwei Paare von gegeneinander bewegbaren Klemmbacken vorgesehen sind, die auf eine besondere Weise gleitbar bewegbar sind, um schonend eine feste Verbindung zwischen den Rändern der Endabschnitte erstellen zu können.

Die DE 101 56 472 A befasst sich mit einem Verfahren zum stumpfen Spleißen mit Hilfe einer Spleißeinrichtung, die ebenfalls oberhalb und unterhalb einer Spleißunterlage jeweils ein Backenpaar aufweist, wobei die Backen jedes Backenpaares horizontal zueinander und voneinander bewegbar sind und die Backenpaare insgesamt vertikal zueinander und voneinander bewegbar sind. Die Vertikalbewegung der Backenpaare erfolgt dabei unabhängig von der horizontalen Bewegung der einzelnen Backen, wodurch der Spleißvorgang schneller ablaufen kann.

In der Materialvorbereitung sind die bekannten Verfahren vergleichsweise einfach durchzuführen, da in diesem Fall in einer Ebene gearbeitet werden kann. Für eine Rationalisierung des Produktionsablaufes von Fahrzeugluftreifen ist es jedoch wünschenswert, ein stumpfes Spleißen von Reifenbauteilen automatisiert in den gesamten Reifenaufbauprozess einbinden zu können.

Der Erfindung liegt die Aufgabe zu Grunde, ein Verfahren und eine Vorrichtung zur Verfügung zu stellen, welches bzw. welche einen automatisiert ablaufenden Herstellungsprozess unterstützt bzw. ermöglicht.

Was das Verfahren betrifft wird die gestellte Aufgabe erfindungsgemäß dadurch gelöst, dass die abgelängte Materialbahn in der Ebene ausgebreitet wird und an ihren Endabschnitten von den Spleißelementen eines der Paare von Spleißelementen erfasst wird,
diese Spleißelemente gegensinnig zueinander um 180° geschwenkt und gleichzeitig in eine Position vertikal gegenüber dem zweiten Paar von Spleißelementen geführt bzw. gefahren werden, wodurch die Materialbahn ringartig verformt wird, wobei
anschließend der Spleiß erstellt wird.

Was die Vorrichtung betrifft wird die gestellte Aufgabe erfindungsgemäß dadurch gelöst, dass sie einen Tisch zur ebenen Auflage der Materialbahn aufweist, dass die oberen oder die unteren Spleißelemente mit Einrichtungen zur Fixierung der Materialbahn versehen und an Führungs- und Schwenkeinrichtungen gelagert sind, mittels welcher die von den betreffenden Spleißelementen aufgenommenen und gehaltenen Endabschnitte um 180° schwenkbar und gleichzeitig verfahrbar sind, bis sie eine Position vertikal gegenüber dem zweiten Paar von Spleißelementen einnehmen.

Vorteilhafte weiterbildungen der Erfindung sind Gegenstand der betreffenden abhängigen Ansprüche.

Die Erfindung ermöglicht auf rationelle Weise, die abgelängte und in der Ebene abgelegte Materialbhan in der Spleißeinrichtung zu positionieren. Das erfindungsgemäße Verfahren und die erfindungsgemäße Vorrichtung eignen sich auch sehr gut zum Spleißen von Materialbahnen zur Herstellung von sogenannten Winkelkarkassen

Diese Handhabung der Materialbahn soll weitgehend automatisiert ablaufen können. Es ist daher vorgesehen, dass die abgelängte Materialbahn von einer Servicereinrichtung auf dem Tisch abgelegt wird.

Das Verfahren kann derart ablaufen, dass die Materialbahn bzw. deren Endabschnitte von den unteren Spleißelementen an ihrer Oberseite oder von den oberen Spleißelementen an ihrer Unterseite aufgenommen werden. Beide Varianten stellen eine rationelle Positionierung der Endabschnitte der Materialbahn zur Durchführung des Spleißes sicher.

Auch nach dem Spleißvorgang soll die Handhabung der gespleißten Materialbahn automatisch ablaufen. Dazu ist vorgesehen, dass die Materialbahn von einer Transfereinheit aufgenommen und an eine Transfereinrichtung übergeben wird, welche die Materialbahn zur Reifenaufbaumaschine transportiert.

Wie bereits erwähnt, werden die Endabschnitte der Materialbahn an den Spleißelementen festgehalten. Dafür besonders geeignete Einrichtungen sind beispielsweise Saugeinrichtungen (Vakuumsauger), die an den Spleißelementen vorgesehen sind. Bei der Handhabung von Materialbahnen, die Stahlcorde enthalten, können die Spleißelemente auch elektromagnetisch arbeitende Festhalteeinrichtungen aufweisen.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1a, 1b und 1c anhand von schematischen Ansichten die Ausführung und die Funktionsweise von Klemmleisten zur Herstellung eines stumpfen Spleißes,
Fig. 2a und 2b sowie Fig. 3a und 3b schematische Ansichten von Vorrichtungen zur automatischen Positionierung einer zu spleißenden Materialbahn.

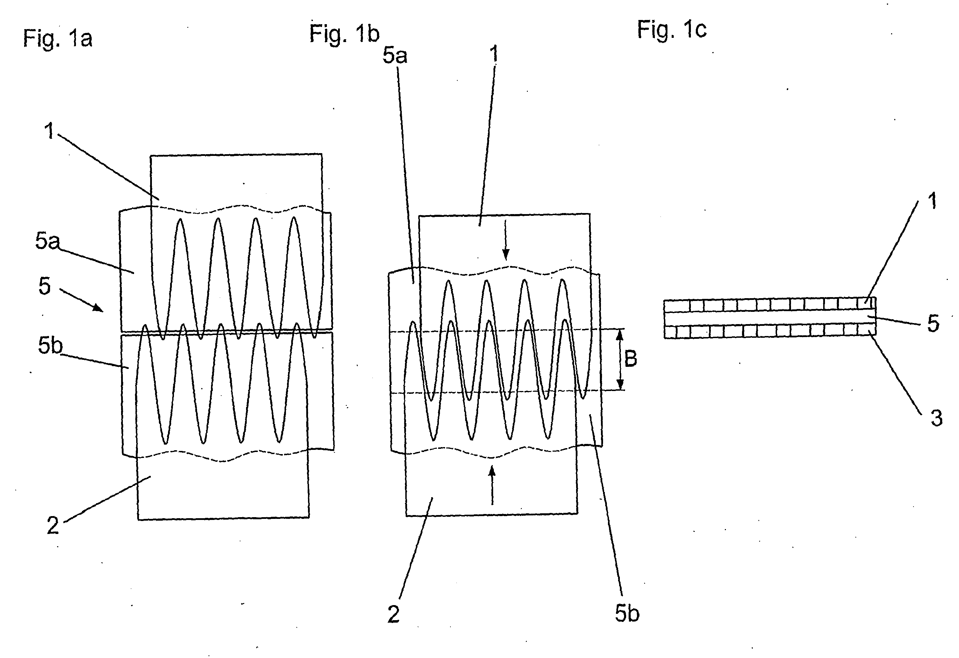

Fig. 1a und Fig. 1b zeigen in Draufsicht die beiden Endabschnitte 5a, 5b einer bereits abgelängten Materialbahn 5, die beispielsweise aus Kautschuk beschichteten Textil- oder Stahlcorden besteht und zur Herstellung einer Karkasseinlage eines Fahrzeugluftreifens vorgesehen ist. Die Endabschnitte 5a, 5b werden in der Ebene stumpf zusammengefügt, sodass die Materialbahn 5 in eine Ringform gebracht wird. Fig. 1a zeigt die gegenseitige Lage der Stirnseiten der Endabschnitte 5a, 5b unmittelbar vor dem Spleißvorgang, welcher mittels zweier Paare von verzahnten Klemmleisten 1, 2 und 3, 4 durchgeführt wird, die Bestandteile von Spleißelementen sind. Das Klemmleistenpaar 1, 2 erfasst die bzw. liegt an der Oberseite der Endabschnitte 5a, 5b, das Klemmleistenpaar 3,4 kommt mit der Unterseite der Endabschnitte 5a, 5b in Kontakt. Das in Fig.1a und 1b gezeigte Klemmleistenpaar kann das obere Paar 1, 2 oder das untere Paar 3, 4 sein. Die einander zugewandten Endabschnitte jedes Paares von Klemmleisten 1, 2 und 3, 4 sind mit einer ausgeprägten Verzahnung versehen, wobei, wie Fig. 1a zeigt, die gegenseitige Anordnung der Zähne derart getroffen ist, dass die beiden oberen Klemmleisten 1, 2 und gleichermaßen die beiden unteren Klemmleisten 3, 4 unter gegenseitigem Eingriff der Zähne geringfügig ineinander geschoben werden können. Fig. 1b zeigt eines der Klemmleistenpaare 1, 2 bzw. 3, 4 in der ineinander geschobenen Lage, das andere Klemmleistenpaar 3, 4 ist gleichzeitig gleichermaßen ineinander geschoben. Durch das Zusammenfahren der oberen Klemmleisten 1, 2 und der beiden unteren Klemmleisten 3, 4 werden die stirnseitigen Schnittflächen der beiden Endabschnitte 5a, 5b der Materialbahn 5 fest gegeneinander gedrückt. Die verzahnten Klemmleisten 1, 2 und 3, 4 gewährleisten in der Ebene ein gut haltbares stumpfes Spleißen der Endabschnitte einer Materialbahn.

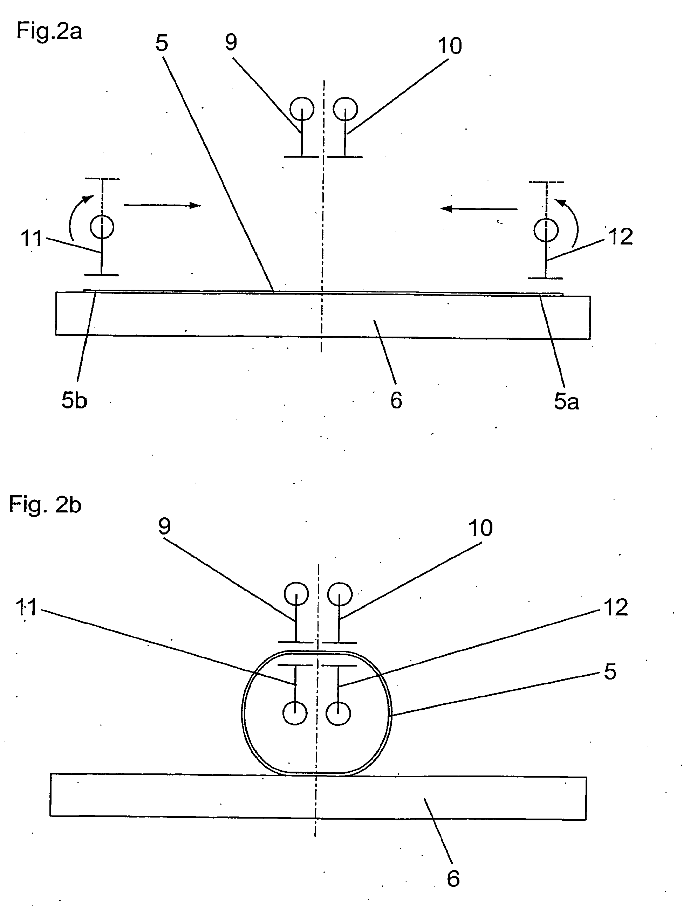

Fig. 2a und 2b veranschaulichen eine erste Ausführungsform eines erfindungsgemäßen Verfahrens und einer erfindungsgemäßen Vorrichtung. Dabei sind die wesentlichen Verfahrensschritte und die Hauptkomponenten der Vorrichtung lediglich schematisch dargestellt. Eine bereits abgelängte Materialbahn 5 wird über eine nicht gezeigte Servicereinrichtung, beispielsweise ein Transportband, auf einem Tisch 6 abgelegt. Oberhalb des Tisches 6 befindet sich die eigentliche Spleißeinrichtung, deren wesentlichen Bestandteile obere Spleißelemente 9, 10 und untere Spleißelemente 11, 12 sind. Die Spleißelemente 9, 10 und 11, 12 können mit paarweise zusammenfügbaren verzahnten Klemmleisten, wie oben beschrieben, versehen sein. Die oberen Spleißelemente 9, 10 sind mittels einer nicht gezeigten Einrichtung in vertikaler Richtung bewegbar und zum Zusammenfügen der Enden der Materialbahn 5 in horizontaler Richtung zueinander und voneinander weg bewegbar. Für die unteren Spleißelemente 11, 12 sind nicht dargestellte Führungseinrichtungen vorgesehen, mittels welcher jedes Spleißelement 11, 12 um 180° gedreht bzw. geschwenkt und aus einer Aufnahmeposition für die Endabschnitte 5a, 5b der auf dem Tisch 6 befindlichen Materialbahn 5 in eine Position unterhalb und gegenüber den oberen Spleißelementen 9, 10 bringbar ist. Zumindest die unteren Spleißelemente 11, 12, vorzugsweise auch die oberen Spleißelemente 9, 10, sind mit einer Einrichtung zum Festhalten der Endabschnitte 5a, 5b der Materialbahn 5 versehen. Diese Einrichtungen sind beispielsweise Saugeinrichtungen an den Spleißelementen 9, 10, 11, 12 (Vakuumsauger). Bei Materialbahnen, die Stahlcorde beinhalten, können auch elektromagnetisch arbeitende Fixiereinrichtungen vorgesehen sein. Die auf dem Tisch 6 aufliegende Materialbahn 5 wird an den Endabschnitten 5a, 5b von den unteren Spleißelementen 11, 12 aufgenommen und gehalten. Dabei wird dieser Vorgang derart durchgeführt, dass die Endabschnitte 5a, 5b bereits für den nachfolgenden Spleißvorgang entsprechend exakt ausgerichtet sind. Anschließend werden die unteren Spleißelemente 11, 12 gegensinnig jeweils um 180° geschwenkt und gleichzeitig in eine Position vertikal gegenüber den oberen Spleißelementen 9, 10 bewegt. Durch die Schwenk- und Führungsbewegung der Spleißelemente 11, 12 wird die Materialbahn 5 in eine ringartige Form gebracht, die Stirnflächen der Endabschnitte 5a, 5b sind jedoch noch nicht zusammengefügt. Die oberen und die unteren Spleißelemente 9, 10 und 11, 12 sind nun in vertikaler Richtung ausgerichtet, sodass die Endabschnitte 5a, 5b der Materialbahn 5 durch ein vertikales Zusammenfahren der Spleißelemente 9, 11 und 10, 12 zwischen diesen eingeklemmt werden können. Nun kann der Spleißvorgang durchgeführt werden, indem die oberen Spleißelemente 9, 10 und die unteren Spleißelemente 11, 12 aufeinander zu bewegt werden, um die Stirnflächen der Endabschnitte 5a, 5b der Materialbahn 5 miteinander zu verbinden. Dies kann unter Verwendung von Klemmleisten und wie anhand der Figuren 1a bis 1c beschrieben durchgeführt werden.

Nach dem Spleißen werden die unteren Spleißelemente 11, 12 aus der nun geschlossenen ringförmigen Materialbahn 5 herausgefahren, die oberen Spleißelemente 9, 10 halten, beispielsweise mittels Vakuumsaugeinrichtungen, die Materialbahn 5 fest. Nun kann eine nicht gezeigte Transfereinheit in den Materialbahnring eingefahren werden und diesen übernehmen. Bei der weiteren Handhabung der ringförmigen Materialbahn wird diese an eine Transfereinrichtung übergeben, welche den Transport und die Positionierung auf einer Reifenaufbautrommel übernimmt.

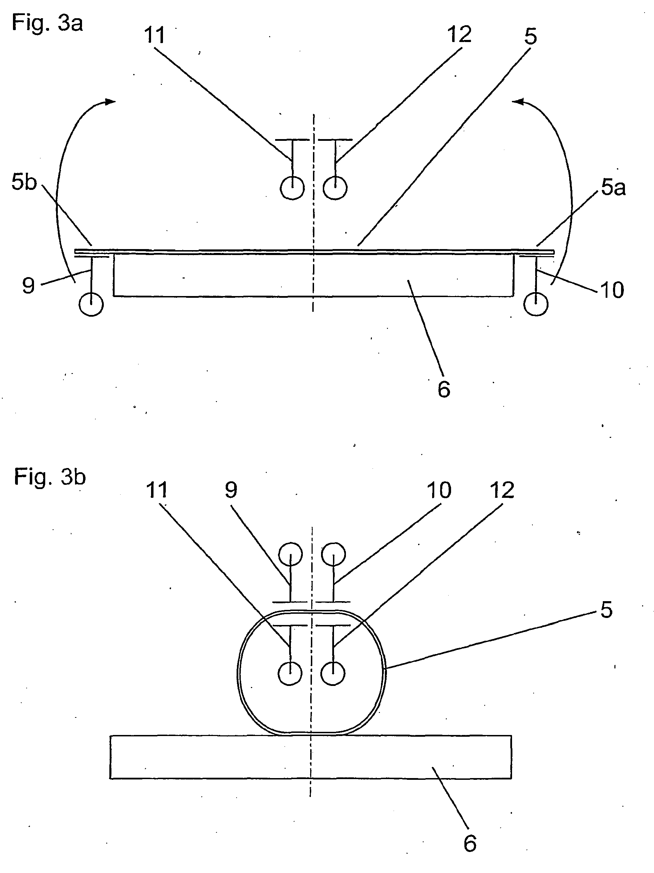

Bei der in Fig. 3a und 3b gezeigten Ausführungsform ist vorgesehen, dass die oberen Spleißelemente 9, 10 die am Tisch 6 abgelegte Materialbahn 5 an deren Unterseite erfassen. Um dies zu ermöglichen, ist beispielsweise vorgesehen, den Tisch 6 soweit zusammenfahren zu können, dass die Endabschnitte 5a, 5b seitlich des Tisches 6 hinausragen. Auch bei dieser Ausführungsform sind für die Spleißelemente 9, 10 Führungseinrichtungen vorgesehen, die ein gegensinniges Verschwenken der Spleißelemente 9, 10 um 180° und ein Verfahren in eine Position oberhalb der unteren Spleißelemente 11, 12 durchführen. Die Handhabung der Materialbahn 5 beim Spleißen und nachfolgenden Transferieren entspricht jener gemäß der Ausführungsform nach Fig. 2a und 2b.

Die einzelnen Schritte laufen automatisiert unter Einsatz einer entsprechenden programmgesteuerten Einrichtung ab und sind in einen weitgehend automatisch ablaufenden Reifenaufbauprozess eingebunden.

## Patentansprüche

1. Verfahren zum Einsatz beim automatisiert ablaufenden Aufbau eines Fahrzeugluftreifens unter Verwendung von stumpf gespleißten Reifenbauteilen, beispielsweise aus Materialbahnen (5) aus in eine Kautschukmischung eingebetteten textilen Corden oder Stahlcorden, beispielsweise zur Herstellung einer Karkasseinlage des Fahrzeugluftreifens, wobei die Endabschnitte (5a,5b) der Materialbahn (5) in einer Spleißeinrichtung mit gegeneinander bewegbaren Paaren von Spleißelementen (9, 10; 11, 12) einklemmbar und stumpf zusammenfügbar sind,
**dadurch gekennzeichnet ,**
**dass** die abgelängte Materialbahn (5) in der Ebene ausgebreitet wird und an ihren Endabschnitten (5a, 5b) von den Spleißelementen (9, 10; 11, 12) eines der Paare von Spleißelementen (9, 10; 11, 12) erfasst wird,
diese Spleißelemente (9, 10; 11,12) gegensinnig zueinander um 180° geschwenkt und gleichzeitig in eine Position vertikal gegenüber dem zweiten Paar von Spleißelementen (9, 10; 11, 12) geführt bzw. gefahren werden, wodurch die Materialbahn (5) ringartig verformt wird, und
anschließend der Spleiß erstellt wird.

2. Verfahren nach Anspruch 1, **dadurch gekennzeichnet, dass** die abgelängte Materialbahn (5) von einer Servicereinrichtung auf einem Tisch (6) abgelegt wird.

3. Verfahren nach Anspruch 1 oder 2, **dadurch gekennzeichnet, dass** die Materialbahn (5) von den unteren Spleißelemente (11, 12) an ihrer Oberseite aufgenommen wird.

4. Verfahren nach Anspruch 1 oder 2, **dadurch gekennzeichnet, dass** die Materialbahn (5) von den oberen Spleißelementen (9, 10) an ihrer Unterseite aufgenommen wird.

5. Verfahren nach einem der Ansprüche 1 bis 4, **dadurch gekennzeichnet, dass** die gespleißte und ringartig geschlossene Materialbahn (5) von einer Transfereinheit aufgenommen und an eine Transfereinrichtung übergeben wird, welche die Materialbahn (5) zur Reifenaufbaumaschine transportiert.

6. Vorrichtung zum Einsatz beim automatisiert ablaufenden Aufbau eines Fahrzeugluftreifens unter Verwendung von stumpf gespleißten Reifenbauteilen, beispielsweise aus Materialbahnen (5) aus in eine Kautschukmischung eingebetteten textilen Corden oder Stahlcorden, beispielsweise zur Herstellung einer Karkasseinlage des Fahrzeugluftreifens, wobei die Endabschnitte (5a, 5b) der Materialbahn (5) in einer Spleißeinrichtung mit gegeneinander bewegbaren Paaren von Spleißelementen (9,10;11,12) einklemmbar und stumpf zusammenfügbar sind,
**dadurch gekennzeichnet,**
**dass** sie einen Tisch (6) zur ebenen Auflage der Materialbahn (5) aufweist, dass die oberen oder die unteren Spleißelemente (9, 10; 11, 12) mit Einrichtungen zur Fixierung an der Materialbahn (5) versehen sind und an Führungs- und Schwenkeinrichtungen gelagert sind, mittels welcher die von den betreffenden Spleißelementen (9, 10; 11, 12) aufgenommenen und gehaltenen Endabschnitte (5a, 5b) um 180° schwenkbar und gleichzeitig verfahrbar sind, bis sie eine Position vertikal gegenüber dem zweiten Paar von Spleißelementen (9, 10; 11, 12) einnehmen.

7. Vorrichtung nach Anspruch 6, **dadurch gekennzeichnet, dass** die Spleißelemente (9, 10; 11,12) Saugeinrichtungen wie Z.B. Vakuumsauger, aufweisen.

8. Vorrichtung nach Anspruch 6, **dadurch gekennzeichnet, dass** bei der Handhabung von Materialbahnen (5), die Stahlcorde enthalten, die Spleißelemente (9, 10; 11, 12) elektromagnetisch arbeitende Festhalteeinrichtungen aufweisen.

## Claims

1. Method for use in the automated construction of a pneumatic vehicle tyre using butt-spliced tyre components, for example from webs of material (5) comprising textile cords or steel cords embedded in a rubber mixture, for example for producing a carcass inlay of the pneumatic vehicle tyre, wherein the end portions (5a, 5b) of the web of material (5) can be clamped in a splicing device with pairs of splicing elements (9, 10; 11, 12) that can be moved towards one another, and can be joined together in a butt fashion, **characterized in that**
the cut-to-length web of material (5) is spread out in a planar fashion and is seized at its end portions (5a, 5b) by the splicing elements (9, 10; 11, 12) of one of the pairs of splicing elements (9, 10; 11, 12),
these splicing elements (9, 10; 11, 12) are pivoted by 180° oppositely in relation to one another and at the same time guided or moved into a position vertically with respect to the second pair of splicing elements (9, 10; 11, 12), whereby the web of material (5) is formed in the manner of a ring, and
the splice is subsequently produced.

2. Method according to Claim 1, **characterized in that** the cut-to-length web of material (5) is placed on a table (6) by a servicer.

3. Method according to Claim 1 or 2, characteristic that the web of material (5) is picked up on its upper side by the lower splicing elements (11, 12).

4. Method according to Claim 1 or 2, **characterized in that** the web of material (5) is picked up on its underside by the upper splicing elements (9, 10).

5. Method according to one of Claims 1 to 4, **characterized in that** the web of material (5) that has been spliced and closed in the manner of a ring is picked up by a transfer unit and transferred to a transfer device, which transports the web of material (5) to the tyre building machine.

6. Device for use in the automated construction of a pneumatic vehicle tyre using butt-spliced tyre components, for example from webs of material (5) comprising textile cords or steel cords embedded in a rubber mixture, for example for producing a carcass inlay of the pneumatic vehicle tyre, wherein the end portions (5a, 5b) of the web of material (5) can be clamped in a splicing device with pairs of splicing elements (9, 10; 11, 12) that can be moved towards one another, and can be joined together in a butt fashion, **characterized in that**
it has a table (6) for the planar support of the web of material (5), **in that** the upper or lower splicing elements (9, 10; 11, 12) are provided with devices for fixing to the web of material (5) and are mounted on guiding and pivoting devices, by means of which the end portions (5a, 5b) picked up and held by the relevant splicing elements (9, 10; 11, 12) can be pivoted by 180° and at the same time can be moved until they assume a position vertically with respect to the second pair of splicing elements (9, 10; 11, 12).

7. Device according to Claim 6, **characterized in that** the splicing elements (9, 10; 11, 12) have suction devices, such as for example vacuum suckers.

8. Device according to Claim 6, **characterized in that**, when handling webs of material (5) that contain steel cords, the splicing elements (9, 10; 11, 12) have electromagnetically operating holding devices.

## Revendications

1. Procédé destiné à être utilisé dans le montage automatisé d'un bandage pneumatique pour véhicule par recours à des composants de bandage ligaturés bout à bout, par exemple en nappes (5) de matière constituées de câbles textiles ou de câbles d'acier incorporés dans un mélange de caoutchouc, par exemple pour la fabrication de la garniture de carcasse du bandage pneumatique de véhicule, dans lequel les parties d'extrémité (5a, 5b) de la nappe (5) de matière peuvent être serrées dans un dispositif de ligature par des paires d'éléments de ligature (9, 10; 11, 12) qui peuvent être déplacés l'un vers l'autre et être assemblées bout à bout,
**caractérisé en ce que**
la nappe (5) de matière découpée à longueur est étalée dans un plan et ses parties d'extrémité (5a, 5b) sont saisies par les éléments de ligature (9, 10; 11, 12) d'une des paires d'éléments de ligature (9, 10; 11, 12),
ces éléments de ligature (9, 10; 11,12) sont inclinés l'un par rapport à l'autre de 180° dans des sens opposés et sont amenés ou transportés simultanément dans une position verticale par rapport à la deuxième paire d'éléments de ligature (9, 10; 11, 12), ce qui déforme la nappe (5) de matière en anneau et
la ligature est ensuite formée.

2. Procédé selon la revendication 1, **caractérisé en ce que** la nappe (5) de matière découpée à longueur est déposée sur une table (6) par un dispositif d'alimentation.

3. Procédé selon les revendications 1 ou 2, **caractérisé en ce que** la nappe de matière (5) est saisie par son côté supérieur par les éléments inférieurs de ligature (11, 12).

4. Procédé selon les revendications 1 ou 2, **caractérisé en ce que** la nappe (5) de matière est saisie par son côté inférieur par les éléments supérieurs de ligature (9, 10).

5. Procédé selon l'une des revendications 1 à 4, **caractérisé en ce que** la nappe (5) de matière ligaturée et fermée en anneau est reprise par une unité de transfert et est transférée à un dispositif de transfert qui transporte à la nappe (5) de matière vers la machine de montage de bandages.

6. Dispositif destiné à être utilisé dans le montage automatisé d'un bandage pneumatique pour véhicule, par recours à des composants de bandage ligaturés bout à bout, par exemple en nappes (5) de matière constituées de câbles textiles ou de câbles d'acier incorporés dans un mélange de caoutchouc, par exemple pour la fabrication de la garniture de carcasse du bandage pneumatique de véhicule, dans lequel les parties d'extrémité (5a, 5b) de la nappe (5) de matière peuvent être serrées dans un dispositif de ligature par des paires d'éléments de ligature (9, 10; 11, 12) qui peuvent être déplacés l'un vers l'autre et être assemblées bout à bout,
**caractérisé en ce que**
le dispositif présente une table (6) qui permet de poser à plat la nappe (5) de matière, **en ce que** les éléments supérieurs ou les éléments inférieurs de ligature (9, 10; 11, 12) sont dotés de dispositifs de fixation sur la nappe (5) de matière et sont montés sur des dispositifs de guidage et de pivotement au moyen desquels les tronçons d'extrémité (5a, 5b) saisis et maintenus par les éléments de ligature (9, 10; 11, 12) concernés peuvent être pivotés sur 180° et en même temps transportés jusqu'à ce qu'ils prennent une position située à la verticale par rapport à la deuxième paire d'éléments de ligature (9, 10; 11, 12).

7. Dispositif selon la revendication 6, **caractérisé en ce que** les éléments de ligature (9, 10; 11, 12) présentent des dispositifs d'aspiration, par exemple des aspirateurs sous vide.

8. Dispositif selon la revendication 6, **caractérisé en ce que** lorsque l'on manipule des nappes de matière (5) qui contiennent des câbles d'acier, les éléments de ligature (9, 10; 11, 12) présente des dispositifs d'immobilisation qui travaillent électromagnétiquement.
